(19) Europäisches Patentamt
European Patent Office
Office européen des brevets

(11) Publication number: 0 093 007
A2

(12) # EUROPEAN PATENT APPLICATION

(21) Application number: 83302329.4

(22) Date of filing: 25.04.83

(51) Int. Cl.[3]: C 08 J 7/12
C 08 J 7/14, C 08 F 8/00

(30) Priority: 27.04.82 GB 8212190
12.11.82 GB 8232365

(43) Date of publication of application:
02.11.83 Bulletin 83/44

(84) Designated Contracting States:
AT BE CH DE FR GB IT LI LU NL SE

(71) Applicant: The University Court of the University of Glasgow
The University
Glasgow Scotland(GB)

(72) Inventor: Curtis, Adam Sebastian Genevieve
2 Kirklee Circus
Glasgow Scotland(GB)

(72) Inventor: Kirby, Gordon William
Buchanan Cottage Buchanan Castle
Drymen Stirlingshire Scotland(GB)

(74) Representative: Szczuka, Jan Tymoteusz et al,
Cruikshank & Fairweather 19 Royal Exchange Square
Glasgow G1 3AE Scotland(GB)

(54) **Method of treating the surface of polymeric material.**

(57) A process for treating certain polymeric materials such as polypropylene and polystyrene incorporating structural units each containing at least one tertiary carbon atom to improve certain surface characteristics comprises forming in the vicinity of the surface of the material a dense concentration of hydroxyl groups, substantially all the hydroxyl groups being attached to tertiary carbon atoms without the formation of appreciable quantities of aldehydes, peroxides, ketones or epoxides and without appreciable −C−C− chain scission.

The treated material exhibits high qualities in many directions including those of high wettability, cell adherence, permeability and dye take-up.

EP 0 093 007 A2

Croydon Printing Company Ltd.

TITLE MODIFIED
see front page

0093007

# METHOD OF TREATING POLYMERIC MATERIAL TO IMPART SPECIFIC PROPERTIES OR TO IMPROVE EXISTING PROPERTIES

This invention relates to a method of treating the surface of polymeric material to impart new properties to the material or improve existing properties of the material, in particular to improve its ability to adhere to other substances such as substrates including biological cells, enhancing its hydrophilic qualities, changing its permeability to make it suitable for use as a permeable membrane suited to specific applications, and in particular to impart or improve its wettability and where the material is in fibrous form to improve the dyeability of the fibres.

One such known method of altering or improving the surface properties of a polymeric material such as an acrylonitrile-butadiene-styrene polymer or polypropylene consists of oxidizing the surface of the material by the use of oxidizing agents such as air or oxygen gas mixtures at elevated temperatures. The treatment forms a surface with an appreciable density of carboxyl groups. It has also been proposed to treat polyolefines which may be in fibrous form with strong oxidizing solutions such as strong sulphuric acid-dichromate solutions to improve their dyeability or to improve greatly their ability to become properly metallized by a vacuum process almost irrespective of the shape of the treated article. Polymeric substances have also been treated by corona discharge, with or without polymerizable compounds in the gaseous medium to improve bonding or wetting or dye binding characteristics of the surfaces or to impart such characteristics to the surfaces.

Not a great deal is known about what actually happens at oxidized surfaces but microscopic examination of treated surfaces appears to indicate that the surfaces have been etched and that metal

deposited on the surface has merely become keyed to the etched surface. The bond thus appears to be mechanical rather than chemical.

It is an object of the present invention to provide a process for treating certain polymeric materials to form on them new chemically active surfaces which have new properties and/or improve their existing properties, in particular to confer or improve wettability, or in fibrous polymeric material to improve dyeability, also to enable the polymeric material to bond with other substances to give enhanced adhesiveness. The process of the invention is also applicable to change the permeability of polymeric materials so that such materials can be utilized as porous membranes with specific qualities particularly selectivity such as imparting particular molecular sieving properties so that it is suitable or more suitable for use in applications such as reverse osmosis, kidney dialysis and metal extraction from aqueous solution.

Among the products which can be formed of plastics materials treated according to the process of the invention are culture dishes for cell growth and rigid grafts and implants such as heart valves and also flexible filaments from which grafts can be knitted or woven, thus rendering the process suitable for use in the provision of vascular grafts. One such material to which the process is particularly applicable and which is used to a large and increasing extent is polystyrene.

According to the invention a process for treating polymeric materials of the type in which the main monomer component is a monosubstituted ethylene $CH_2 = \underset{\displaystyle X}{\underset{|}{CH}}$, where X is a hydrocarbon moiety, yielding on polymerization structural units with at

least one tertiary carbon atom, comprises forming in the vicinity of the surface of the material a dense concentration of hydroxyl groups, substantially all the hydroxyl groups being attached to tertiary carbon atoms without the formation of appreciable quantities of aldehydes, peroxides, ketones or epoxides and without appreciable -C-C- chain scission.

The expression "vicinity of the surface" means in the surface or on the surface or near the surface.

The plastics materials capable of being treated may be the raw plastics material before fabrication or may be fully fabricated articles wholly or partially made of the polymer, particularly objects formed by injection moulding.

The process may be performed by treating the polymer with a low concentration of acid of the form $HXO_3$ where X is an element chosen from the group of bromine or chlorine, performing the reaction in the presence of sufficient concentration of another strong acid to produce active radicals, leaving the mixture of acids in contact with the material until a sufficient concentration of hydroxyl groups has been formed on or near the surface, removing the mixture of acids and washing the treated material. If considered necessary the washing operation may include a prewash with a weak alkali to remove any residual acid.

The hydroxylated material may be appropriate for certain purposes without further processing, but if required the more fully hydroxylated material can be separated from the base material by a variety of solution processes taking advantage of the affinity of the hydroxylated material for water.

Since $HBrO_3$ and $HClO_3$ (bromic and chloric acid) may not be readily available the treatment may be varied

while remaining within the scope of the invention by applying to the polymer a mixture of a strong acid such as sulphuric or perchloric acid and a sufficient concentration of a chlorate or bromate of an element chosen from the set of elements in Groups I or II of the Periodic Table to yield concentrations of chloric or bromic acid equal to or greater than 0.1%.

Polymers containing at least one tertiary carbon atom in each repeating unit of the polymer are capable of hydroxylation by this reaction. Polymers composed of mixtures of repeating units of two or more types are reactable in respect of those repeating units containing one or more tertiary carbon atoms.

Thus polystyrene, derivatives of polystyrene such as methyl, halogen substituted polystyrenes (where the substitution is on the aromatic ring, including in particular poly-4-methyl-styrene, poly-(tertiary)-butylstyrene, poly-isopropyl-styrene), polypropylene, poly-1-butene, poly-4-methyl pentene, poly-3-methyl-1-butene, poly-1-pentene, polynorbornene and low pressure polyethylene, (branched polyethylene), poly-1.2.butadiene and binary, tertiary and other co-polymers of the above with either other members of the set or with acrylonitrile, other butadienes, or graft polymers in which a major component is one or more of the polymers listed above may be treated. Also treatable are physical mixtures of polymers containing an appreciable component of one or more of the above, where appreciable means such a percentage of the material that useful hydroxylation can be conferred by the treatment. Thermo-setting resins in which styrene or substituted styrenes from the list above form an appreciable proportion of the resin monomer may also be treated.

Co-polymers of these with other monomer materials such as acrylonitrile and graft polymers with fluorinated ethylenes are capable of hydroxylation by this reaction.

The process for treating the surface of polystyrene may comprise immersing the polystyrene in a mixture of 68% (w/v) sulphuric acid and 2% (w/v) chloric acid, for a period of time between 0.1 and 5 minutes at 25$^{o}$C depending on the extent of hydroxylation required i.e. according to the characteristics to be imparted to the material being treated. This particular mixture effects very fast hydroxylation. Use of higher concentrations of sulphuric acid can result in decomposition of the chloric acid. The particular concentration of sulphuric used has a direct effect on the speed of reaction and on the extent of side reactions such as formation of carboxyl groups which may in some cases confer useful properties.

Another process for treating polystyrene may comprise applying to the surface a mixture of equal volumes of 68% sulphuric acid and water and a saturated aqueous solution of a chlorate or bromate of an alkali metal chosen from Group I or Group II of the Periodic Table. Suitable metals from Groups I and II of the Periodic Table are lithium, sodium, potassium, rubidium, calcium, barium and magnesium. As an example of an alkali metal chlorate which is suitable for use in the process there may be used a 0.3N solution of potassium chlorate along with sulphuric acid containing less than 35% water. On polystyrene the time of exposure to the liquid for best results lies between 10 and 30 minutes.

Yet another process for treating the surface of polystyrene may comprise immersing the polystyrene in a solution buffered with an inorganic buffer system at pH 7.0 at a buffer concentration of about 0.1M in phosphate ions. 100 milligrams of potassium superoxide are added per 100 ml of buffer. The medium is stirred rapidly and then allowed to react for a

period between 10 minutes and 2 hours. If insufficient hydroxylation is obtained two or three further additions of potassium superoxide solid may be made at intervals of at least five minutes during the treatment. Basically the process consists of treating a polymer with a low concentration of radicals produced by the decomposition of superoxide compounds in aqueous solutions. The treatment must be performed while the concentration of radicals remains appreciable.

A process for treating the surface of polypropylene may comprise immersing the polypropylene in a mixture of 68% (w/v) sulphuric acid and 2% (w/v) chloric acid, for a period of time between 0.1 and 5 minutes at 50°C depending on the extent of hydroxylation required i.e. according to the characteristics to be imparted to the material being treated. This particular mixture effects very fast hydroxylation. Use of higher concentrations of sulphuric acid can result in decomposition of the chloric acid. The particular concentration of sulphuric used has a direct effect on the speed of reaction.

The process may also be performed by treating a polymer with a solution of ceric ammonium sulphate in sulphuric acid in the proportion of 0.05 to 10 gm of ceric ammonium sulphate to 100 ml of sulphuric acid in the concentration range 50 - 70% to produce active radicals, leaving the mixture in contact with the material until a concentration of hydroxyl groups exceeding 500 per 1000 $nm^2$ has been formed on or near the surface, removing the reagent and washing the treated material. If considered necessary the washing operation may include a prewash with a weak alkali to remove any residual acid.

The process for treating the surface of polystyrene using ceric ions may comprise immersing the polystyrene in a mixture of 60% (w/v) sulphuric

acid and 2% (w/v) ceric ammonium sulphate for a period of between 1 minute and 10 minutes at 30°C depending on the extent of hydroxylation required i.e. according to the characteristics to be imparted to the material being treated. This particular mixture effects very fast hydroxylation. Use of higher concentrations of sulphuric acid can result in side reactions. The particular concentration of sulphuric used has a direct effect on the speed of reaction.

The reaction conditions require to be adjusted for each specific polymer, e.g. polypropylene reacts more slowly than polystyrene under identical conditions, by altering the concentration of the strong acid or/and by altering the temperature.

An effective method of treating the polymers in bulk is to apply the reagent to thin films of the polymer or to treat the polymer in powder form with effective agitation.

Normally a minimum surface density of 3000 hydroxyl groups per thousand nanometers$^2$ is suitable for the promotion of cell culture on a polymeric surface. Normally a minimum surface density of 500 hydroxyl groups per 1000 nanometers$^2$ is sufficient to impart marked hydrophilic properties to a polymeric surface. The actual surface density of hydroxyl groups may be ascertained by various techniques such as XPS (X ray photoelectron spectroscopy) or ATR (attenuated total internal refraction spectroscopy) or the binding of radioactive agents which combine with hydroxyl groups. More simply the attainment of a suitable density of hydroxyl groups may be judged visually by the fact that the surface containing new hydroxyl groupings becomes highly wettable, typically with contact angles less than 15°. A precise biological method is to measure the plating out efficiency of tissue cells or cell lines on the treated surface. This efficiency

should be greater than 70% for cell lines such as BHK clone C13 cells in a culture medium such as Eagles medium (80 %) Tryptose phosphate broth (10 %), calf serum (10%).

If it is found that the hydroxyl groups are accompanied by the production of excessive surface densities of carboxyl groups the surface for certain applications may be treated by known chemical methods which esterify carboxyl groups or reduce carboxyl groups to alcohols.

Variations in the hydroxylation process make it possible to adapt the surface and bulk characteristics of polymers capable of being treated by the process to a wide variety of uses. Examples of such uses are:- adhesion of cells to surfaces, adhesion of enzymes and other proteins to plastics, adhesion of plastics to glass, carbon fibre, natural fibres, mineral fibres and particularly to the adhesion of thermoplastics to surfaces capable of hydrogen bonding. Dye binding to textiles, binding of surface coatings such as metal oxides in magnetic tapes, cards, discs, etc. Printing and metallizable surfaces. Some of the characteristics changed are permeability, solute and solvent partition in the membrane, changed electrical resistance, changed ion or water mobility and changed molecular sieving properties. By controlling the degree of hydroxylation sufficiently closely a range of different membrane materials can be produced.

EXAMPLE I

Commercial polystyrene petri-dishes (4.7 cm diameter) were washed with petroleum ether (60-80$^{\circ}$C B.Pt fraction) to remove moulding release agents (in practice this step is not essential). They were then treated with a freshly mixed reagent composed

of 35 parts 70%(w/v) perchloric acid and 10 parts of a saturated aqueous solution of potassium chlorate (saturated at 25°C). The temperature of the mixture rises on mixing and it was then applied to the petri dishes at the rate of 3 ml per dish and allowed to react with dishes at 35°C for ten minutes. The dishes were then washed with running tap water until the wash water was not detectably acid. The dishes could then be seen to be very wettable by water. Dishes were dried over phosphorous pentoxide at low pressure and then reacted with radioactive acetic anhydride to measure the binding of acetyl groups to hydroxyl groups. By this means it was shown that the dishes had hydroxyl group densities of about 0.1 nanomoles per gm. Various surface spectroscopic methods confirmed the detection of hydroxyl groups on the treated surfaces of the dishes. The polystyrene before treatment had hydroxyl group densities of less than 1% of the value for treated material.

EXAMPLE II

Polypropylene fibre (12 denier) was treated with 25 ml aliquots of a freshly prepared mixture of 68% sulphuric acid containing 1.5 gm potassium chlorate per litre. In a typical treatment samples containing the following weights of polypropylene were reacted at 35°C for the times stated in the table below. Hydroxylation was measured by the same method as in Example I and detected in parallel samples by the fibre becoming wettable with water and capable of dyeing with a variety of dyes used for dyeing cellulosic fibres.

| Weight of fibre g | Treatment time | Hydroxylation nanomoles per sample |
|---|---|---|
| 1.35 | 10 minutes | 0.31 |
| 1.58 | 20 Minutes | 0.38 |
| 1.35 | 40 minutes | 0.48 |
| 1.47 | 80 minutes | 0.64 |

In another example a similar experiment was carried out at 50°C. Results were as stated in the table below:

| Weight of fibre g | Treatment time | Hydroxylation nanomoles per sample |
|---|---|---|
| 1.00 | 5 minutes | 0.69 |
| 1.01 | 10 minutes | 1.29 |
| 1.01 | 20 minutes | 2.51 |
| 1.00 | 40 minutes | 3.02 |

In general the extent of reaction increases with temperature and duration of exposure. The treatments described above did not exhaust the reactant mixture and it was possible to treat a series of batches with the same aliquot.

EXAMPLE III

30.01 gm of polypropylene powder (100 micron average diameter) was treated with the same reaction mixture as in Example II, using 20 ml for treating this weight of powder. The reaction mixture and the powder were mechanically mixed together and allowed to react at 30°C for ten minutes. The sample was then washed extensively with distilled water and an aliquot dried as in Example I for measurement of hydroxyl groups using radioactive acetic anhydride. A density of hydroxyl groups of 0.18 nanomoles per gm. The untreated material had a hydroxyl density of less than 0.1% of

this. The treated material was wettable with water and bound water very tenaciously when attempts were made to remove it by pumping under high vacuum.

CLAIMS

1. A process for treating polymeric materials of the type in which the main monomer component is a monosubstituted ethylene $CH_2 = \underset{\underset{X}{|}}{C}H$, where X is a hydrocarbon moiety, yielding on polymerization structural units with at least one tertiary carbon atom, is characterized by forming in the vicinity of the surface of the material a dense concentration of hydroxyl groups, substantially all the hydroxyl groups being attached to tertiary carbon atoms without the formation of appreciable quantities of aldehydes, peroxides, ketones or epoxides and without appreciable -C-C- chain scission.

2. A process according claim 1 which is characterized by treating the polymeric material with a low concentration of acid of the form $HXO_3$ where X is an element chosen from the group of bromine or chlorine, performing the reaction in the presence of sufficient concentration of another strong acid to produce active radicals, leaving the mixture of acids in contact with the material until a sufficient concentration of hydroxyl groups has been formed on or near the surface, removing the mixture of acids and washing the treated material.

3. A process according to claim 1 which is characterized by applying to the polymeric material a mixture of a strong acid such as sulphuric or perchloric acid and a sufficient concentration of a chlorate or bromate of an element chosen from the set of elements in Groups I or II of the Periodic Table to yield concentrations of chloric or bromic acid equal to or greater than 0.1%.

4. A process according to claim 1 for treating the surface of a polymeric material comprising polystyrene is characterized by immersing the polystyrene in a mixture of 68% (w/v) sulphuric acid and 2% (w/v)

chloric acid, for a period of time between 0.1 and 5 minutes at 25°C depending on the extent of hydroxylation required i.e. according to the characteristics to be imparted to the material being treated.

5. A process according to claim 1 for treating a polymeric material comprising polystyrene is characterized by applying to the surface of the polymeric material a mixture of equal volumes of 68% sulphuric acid and water and a saturated aqueous solution of a chlorate or bromate of an alkali metal chosen from Group I or Group II of the Periodic Table.

6. A process according to claim 1 for treating polymeric material comprising polystyrene is characterized by treating the material with a low concentration of radicals produced by the decomposition of superoxide compounds in aqueous solutions, the treatment being performed while the concentration of radicals remains appreciable.

7. A process according to claim 6 is characterized by immersing the polystyrene material in a solution buffered with an inorganic buffer system at pH 7.0 at a buffer concentration of 0.1 M say, in phosphate ions, adding at least 100 milligrams of potassium superoxide per 100 ml of buffer, stirring the mixture rapidly and then allowing the resulting reaction to proceed for a period of between 10 minutes and 2 hours duration.

8. A process according to claim 1 for treating the surface of a polymeric material comprising polypropylene is characterized by immersing the polypropylene in a mixture of 68% (w/v) sulphuric acid and 2% (w/v) chloric acid, for a period of time between 0.1 and 5 minutes at 50°C depending on the extent of hydroxylation required i.e. according to the characteristics to be imparted to the material being treated.

9. A process according to claim 1 is characterized by treating the polymeric material with a solution of ceric ammonium sulphate in sulphuric acid in the proportion of 0.05 to 10 gm of ceric ammonium sulphate to 100 ml of sulphuric acid in the concentration range 50 - 70% to produce active radicals, leaving the mixture in contact with the material until a concentration of hydroxyl groups exceeding 500 per 1000 $nm^2$ has been formed on or near the surface, removing the reagent and washing the treated material.

10. A process according to claim 1 for treating the surface of a polymeric material comprising polystyrene is characterized by immersing the polystyrene material in a mixture of 60% (w/v) sulphuric acid and 2% (w/v) ceric ammonium sulphate for a period of between 1 minute and 10 minutes at 30°C depending on the extent of hydroxylation required, i.e. according to the characteristics to be imparted to the material being treated.